Europäisches Patentamt

European Patent Office

Office européen des brevets

(11) Publication number: **0 316 191**
**A2**

# EUROPEAN PATENT APPLICATION

(21) Application number: **88310651.0**

(22) Date of filing: **11.11.88**

(51) Int. Cl.⁴: **H 04 B 9/00**

(30) Priority: **12.11.87 US 119619**

(43) Date of publication of application:
**17.05.89 Bulletin 89/20**

(84) Designated Contracting States:
**AT BE CH DE ES FR GB IT LI NL SE**

(71) Applicant: **RAYCHEM CORPORATION**
**300 Constitution Drive**
**Menlo Park California 94025 (US)**

(72) Inventor: **Levinson, Frank H.**
**317 Northumberland**
**Redwood City California 94061 (US)**

**Giles, Thomas**
**32759 Downeville St.**
**Union City California 94587 (US)**

**Campbell, Brue D.**
**221 Vista Verde Way**
**Portola Valley California 94025 (US)**

**Lavelle, Steve**
**3331A Willard North**
**San Francisco California 94118 (US)**

**Zucker, Joseph**
**546 Trinidad Lane**
**Foster City California 94404 (US)**

**Freeman, William R.**
**641-36 Street**
**Richmond California 94805 (US)**

(74) Representative: **Benson, John Everett et al**
**Raychem Limited Intellectual Property Law Department**
**Faraday Road Dorcan**
**Swindon, Wiltshire SN3 5HH (GB)**

(54) **Dynamic range reduction using mode filter.**

(57) A mode filter for reducing a receiver dynamic range utilized in a write optical fiber bus which includes taps which inject optical signals into an optical fiber so as to have an optical power distribution skewed towards higher order modes rather than lower order modes as compared to an equilibrium power distribution for the fiber functions to preferentially attenuate higher ordered modes rather than lower ordered modes in the fiber so as to reduce a required optical power dynamic range for the optical receiver.

FIG__1

EP 0 316 191 A2

**Description**

## DYNAMIC RANGE REDUCTION USING MODE FILTER

The present invention relates to methods and apparatuses for reducing a dynamic range required of an optical receiver utilized in a distributive optical fiber communication system.

Conventionally, when a transmission optical fiber is coupled to an optical receiver, attempts are made to couple as much light within the fiber as is possible to the receiver, preferably 100%. For example, whenever a pigtail waveguide is utilized to connect an end of the transmission fiber to the optical receiver, care is taken to insure that the pigtail waveguide is capable of supporting and propagating all the light being supported and propagated by the fiber at the fiber end. Accordingly, whenever the waveguide comprises an optical fiber, its numerical aperture (NA) and size is chosen so as to be equal to or larger than that of the transmission fiber such that the waveguide can successfully transport essentially all the light emitted by the transmission fiber end to the receiver. In addition, a portion of the transmission fiber adjacent its end is routed so that no bends are created which are less than the minimum bend radius for the fiber so as to minimize optical power attenuations, the minimum bend radius being that radius which does not unduly stress the fiber or result in any significant amount of light loss, a maximum typical specified stress being one-third the fiber proof stress, a typical minimum bend radius being about 30-40 mm.

It has unexpectedly and surprisingly been discovered that choosing a waveguide which has a mode volume capacity greater than that of certain transmission fibers and routing the end portion of the transmission fiber so that the minimum bend radius is always exceeded are disadvantageous when utilized in a distributive optical fiber system having a plurality of light signals separately generated and injected into the fiber in a way which strongly populates higher order modes relative to lower order modes since a dynamic range of the signals is unduly large which thus requires that the optical receiver have an unduly large dynamic range.

Accordingly, it is an object of the invention to provide a method and apparatus for reducing a dynamic range required of an optical receiver when utilized in a distributive optical fiber system having a plurality of optical sources which inject and multiplex a plurality of optical signals onto a single multimode optical fiber so as to strongly populate higher order modes of the fiber.

These and other objects of the invention are achieved by an apparatus for reducing a dynamic range of signals received by an optical receiver, comprising:
a multimode optical fiber;
a plurality of write taps serially disposed on the optical fiber for injecting a plurality of discrete multiplexed optical signals therein;
an optical receiver located downstream of the plurality of write taps and having means for receiving the signals from the optical fiber;

means disposed between the optical fiber and the optical receiver for attenuating a magnitude of an optical signal generated by a write tap transmitting nearest to the receiver substantially more than a magnitude of an optical signal generated by a write tap transmitting furtherest from the receiver, a difference between the attenuations being in excess of 1.0 dB.

The invention further includes an optical fiber distribution system for distributing information for a plurality of subscriber terminals, comprising:
a plurality of subscriber terminals;
first means for sending information to each of the terminals;
an optical receiver;
a multimode optical fiber;
a plurality of write taps serially disposed on the optical fiber for injecting a plurality of discrete multiplexed optical signals into the optical fiber from the subscriber terminals, each tap injecting its corresponding signal in a manner so as to initially create within a core of the optical fiber an optical signal which includes a plurality of modes ordered from low to high, a first ratio of an intensity of highest ordered modes to an intensity of lowest ordered modes for each initially created signal being substantially greater than a second ratio of an intensity of the highest ordered modes to an intensity of the lowest ordered modes for each signal in the fiber when each signal has attained an equilibrium power distribution within a core of the fiber;
means disposed between the optical fiber and the optical receiver for attenuating a magnitude of an optical signal generated by a tap transmitting nearest to the receiver substantially more than a magnitude of an optical signal generated by a tap transmitting furtherest from the receiver, a difference between the attenuations being in excess of 1.0 dB.

These and other objects will be further explained by reference to the following drawings.

Figure 1 illustrates a first embodiment of the invention whereby an optical filter 4 is disposed in a distributive optical fiber network 12 for reducing a dynamic range of an optical receiver 5;

Figure 2 illustrates details of a tap 21-27 schematically shown in Figure 1;

Figure 3 graphically illustrates a mode volume power distribution for an injected optical signal for a tap such as that shown in Figure 2, and various possible equilibrium mode volume power distributions for various optical fibers usable in the network of Figure 1;

Figures 4a-4d and Figure 5 illustrate various preferred embodiments of a mode filter constructed according to the present invention;

Figure 6 illustrates and compares optical powers detected from optical taps at varying distances from an optical receiver when an optical filter as illustrated in Figure 4a is used and is not used respectively;

Figure 7 illustrates differences in power levels in dB shown in Figure 6;

Figures 8 and 9 illustrate dynamic range reduction values and attenuation measurements made using an optical filter as illustrated in Figure 5;

Figure 10 illustrates yet another preferred embodiment of a mode filter according to the present invention; and

Figure 11 illustrates a preferred placement of a mode filter according to the invention relative to an optical receiver, its pigtail optical fiber, and a "clean" fiber interconnecting the pigtail and a transmission optical fiber.

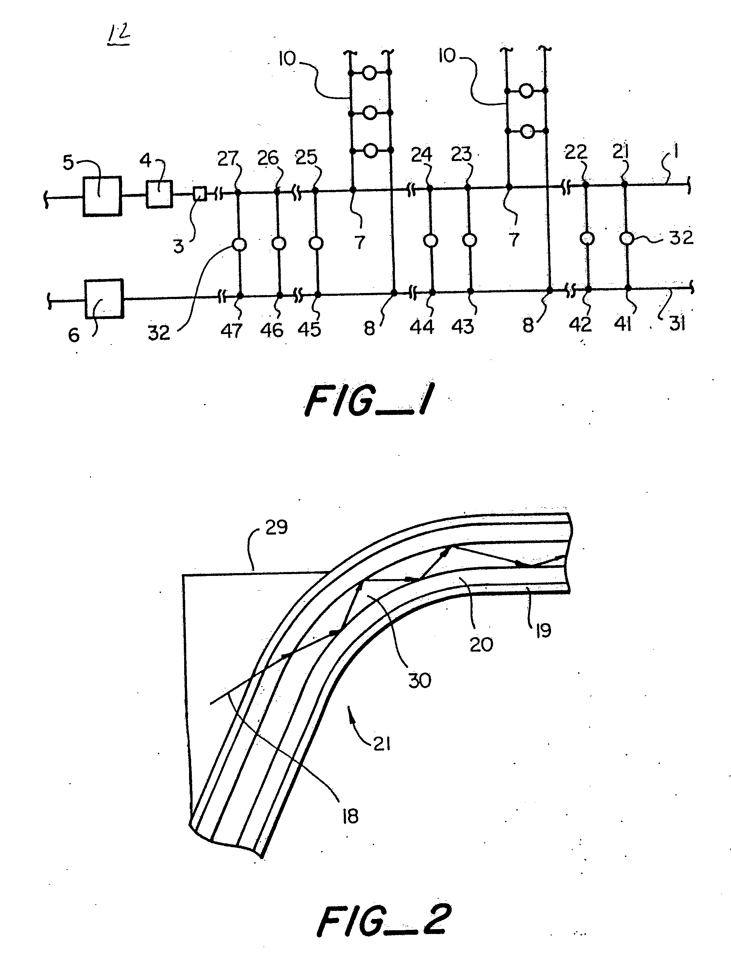

A distributive optical fiber system 12 according to and for use with the present invention is illustrated in Figure 1. Referring to this figure, a mode filter 4 is disposed between a bus optical fiber 1 and an optical receiver 5. A plurality of taps 21-27 are serially connected to the optical fiber 1 for transmitting information to the receiver 5, preferably to a central head end receiver, the information preferably being multiplexed onto the fiber, preferably by time division multiplexing. The system 12 illustrated in Figure 1 further includes a head end transmitter 6 for sending information downstream along read fiber 31 which is tapped by a plurality of taps 41-47 so as to enable subscriber terminal equipment 32 to conduct two-way communication with equipment located external to the system 12, or alternatively with other subscriber terminal equipment included within the system 12. The subscriber terminal equipment can include any combination of telephones, video receivers, computers, etc. Optionally, branched networks 10 can be included within the system 12, the branched networks 10 communicating with the bus fibers 1, 31 via branch taps 7, 8, as illustrated. The number of taps 21-27, 41-47, 7, and 8 connected to the bus fibers 1, 31 is limited primarily by available bandwidth of the system 12 and optical power, and can generally be in excess of 10, 20, 30, 40, or 50, for example.

Remote write taps 21, 22 inject light into the write optical fiber 1 at a distance relatively far from the optical receiver 5, and since such signals are attenuated by upstream taps 23-27, 7, 8 and also by the optical fiber between the taps 21, 22 and the receiver 5, the power levels thereof received by the receiver 5 are relatively low. Conversely, a detected power level of signals injected by near taps 26, 27 relatively close to the receiver 5 are relatively high due to the lack of a significant number of taps and length of fiber between the near taps 26, 27 and the receiver 5. Optical signal power levels received by the optical receiver 5 from intermediate taps 23-25 generally have intermediate power levels, and the result of such a bus construction is that the optical receiver 5 must be able to power hop across a relatively large power range so as to be able to correctly discern information represented by dim optical signals injected by the remote taps 21, 22, bright signals injected by the near taps 26, 27, and intermediate intensity signals injected by intermediate taps 23-25. Accordingly, the optical receiver is required to have a relatively large dynamic range in addition to a high sensitivity required to detect the dimmest signals, unless radically different optical power intensities are generated by the various taps, and these intensities are accurately controlled.

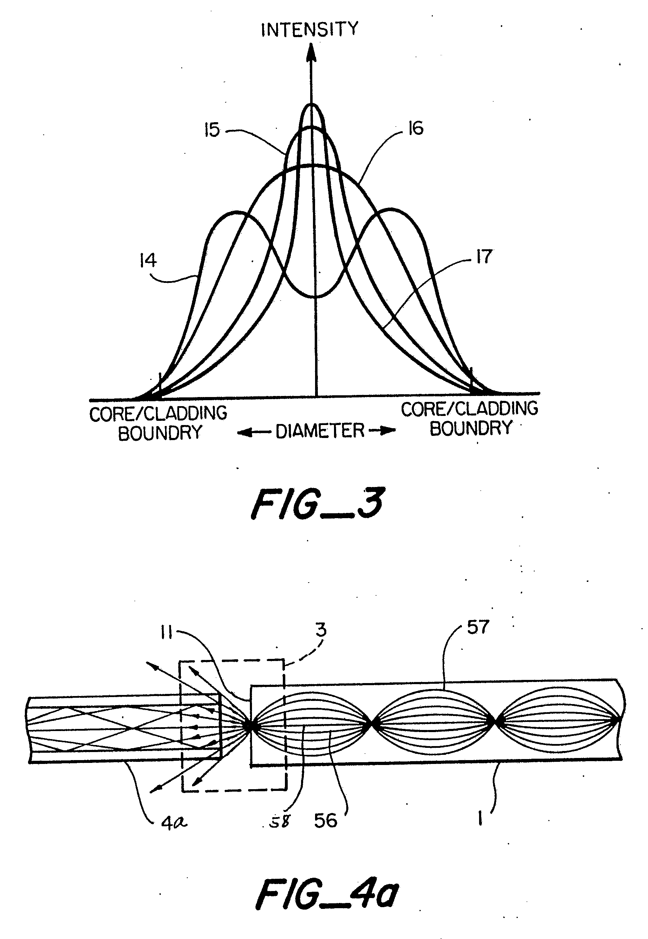

According to the invention, the optical fiber 1 is a multimode fiber, either step or graded index, preferably a glass-on-glass graded index optical fiber comprising and consisting essentially of a silica glass core and cladding, and at least some of the taps 21-27 are of the type wherein the light injected thereby creates a mode volume distribution which is different and on average higher than an equilibrium mode volume distribution for the optical fiber in its power equilibrium state. One example of such a tap 21 is illustrated in Figure 2, the tap 21 being of the type whereby an optical signal 18 is injected into an optical fiber core 30 by passing the light through an optical coupler 29, a side of the fiber cladding 20, and preferably through a side of an outer protective fiber coating 19 at a bend. Though such a tap is capable of injecting inner or lower ordered modes into the optical fiber, on average the intensity of outer or higher ordered modes injected is relatively high as compared to that for the inner or lower ordered modes. A typical graph of the power intensity distribution of modes injected by such a tap measured immediately downstream from the tap is illustrated in Figure 3. Taps which inject locally as illustrated in Figure 2 are more fully described in United States patent numbers 4,664,732; 4,768,854; and 4,741,585, the disclosures of which are incorporated herein by reference.

The invention is operable and utilizable in any network which utilizes any type of tap which initially injects a mode volume distribution which is skewed in intensity towards higher order modes rather than lower order modes as compared to an equilibrium distribution for the fiber. More specifically, Figure 4a illustrates various light modes 56, 57, 58 in a core of a graded index multimode fiber 1. Those mode 57 which form the largest angle with a longitudinal axis of the fiber are the highest order modes, and those modes 58 which form the smallest angle with the fiber longitudinal axis are the lowest order modes. Similarly, all modes forming angles with the fiber longitudinal axis which are larger than that formed by other modes are said to be of a higher order relative to those other modes. Power intensities associated with the various ordered modes of any given fiber tend to stabilize and reach equilibrium values for the fiber after propagating within the fiber for some given distance, e.g. a kilometer or so, regardless of an initial power distribution of the modes at a point of a signal injection, and all power distributions can be evaluated by measuring an optical power intensity of the signal at various points along a cross-sectional end of the fiber by using either near field or far field detection techniques. In addition, the equilibrium mode distribution of the fiber is dependent on other factors as well, such as how the fiber is cabled and a number and types of taps, couplers, etc. disposed thereon as well as their spatial distribution.

Figure 3 is a graph whose horizontal axis corresponds to points along a diameter of the fiber and whose vertical axis corresponds to relative optical intensities. Reference numeral 15 illustrates a typical equilibrium mode distribution for a multimode fiber having a signal propagating therein and no side taps disposed thereon, the distribution having a Gaussian curve shape. A typical mode volume power distribution for a signal injected into a side of a fiber using a tap 21 such as that illustrated in Figure 2 immediately downstream of a location of signal injection is shown by reference numeral 14. Reference numerals 16, 17 illustrate two alternative typical equilibrium mode distributions for the fiber 1 in its installed state, the actual equilibrium distribution for any fiber being dependent on how it is cabled and installed and the types and density of any taps, couplers, connections, etc. thereon. However, it should be noted that if a fiber having a "normal" equilibrium distribution such as 15 has a plurality of taps 21-27 disposed thereon, such taps operate to attenuate predominantly higher ordered modes in a preexisting signal in the fiber causing the equilibrium power distribution to be more highly concentrated in lower ordered modes so as to have a shape 17.

As reference numeral 14 in Figure 3 illustrates, the initial distribution of modes injected by each tap 21 is skewed a very large amount towards the outermost modes as compared to the fiber equilibrium mode distribution 15 or 17 in its installed state. Accordingly, assuming a sufficiently long distance between the remote taps 21, 22 and the optical receiver, the optical signals injected by the taps 21, 22 have a power distribution at the fiber end such as that illustrated by reference numeral 17 rather than a shape such as that illustrated by reference 14 due to continuous mode volume redistribution and attenuation induced by the fiber, cabling, and optical taps 23-27, 7, 8. However, the near taps 26, 27 are generally not disposed sufficiently far away from receiver 5 for equilibrium mode volume redistribution to have occurred so that the mode volume distribution of signals injected by such taps more closely resemble that as illustrated by reference numeral 14 than reference numerals 15 or 16.

According to the invention, a mode filter 4 is disposed between the end 11 of the optical fiber 1 and the optical receiver 5 which functions to preferentially attenuate outermost or higher order modes as opposed to innermost or lower order modes. The net result is that optical signals injected by the near taps 26 or 27 which have a relatively high overall intensity, and an especially high intensity for the higher order modes, are attenuated to a greater degree than are optical signals injected by remote taps 21 or 22 which have reached or nearly reached equilibrium values 15 or 17 and hence have a relatively low intensity for the higher order modes. Since the nearer taps 26 and 27 create optical signals which are brighter than the remote taps 21 or 22 at the receiver 5, the effect of the mode filter is to reduce the dynamic range required by the optical receiver while having a minimal effect on attenuating the dimmest optical signals since they are very lean in outer mode intensity so as to not require that the optical receiver have an unduly increased receiver sensitivity.

When the taps have a construction such as that of Figure 2, even more advantageous results are obtained since taps downstream from the tap 21 preferentially withdraw outermost modes of optical signals previously injected thereinto. Hence, the equilibrium mode distribution for such remote taps is skewed in intensity towards the lower order modes such as is illustrated by reference numeral 17 in Figure 3 as compared to an equilibrium distribution for the fiber as illustrated by reference numeral 15 in Figure 3.

Example 1

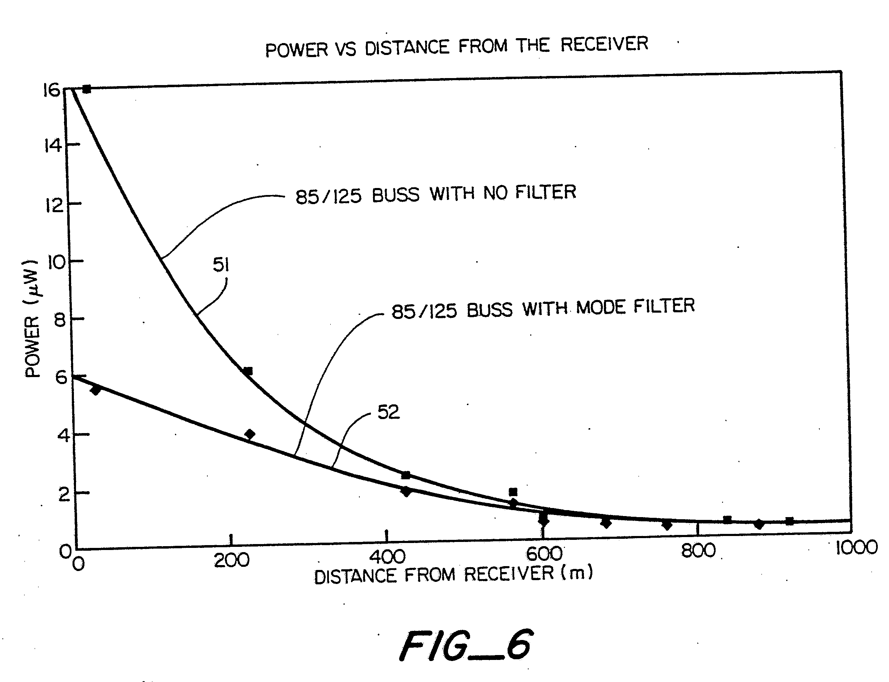

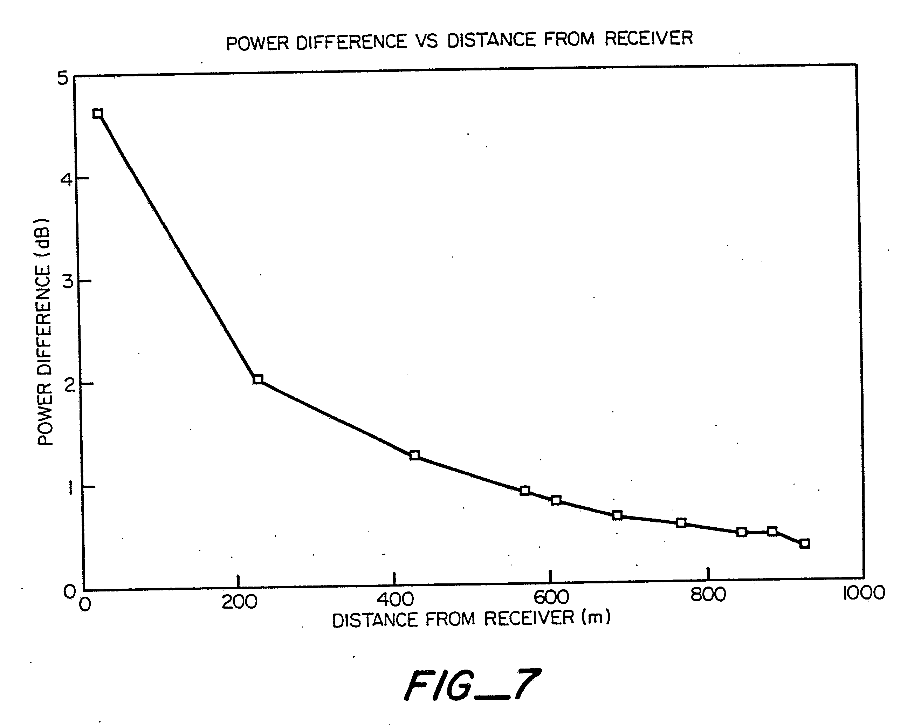

One thousand meters of 85/125 micrometer graded index glass-on-glass fiber had attached thereto 10 write taps which each functioned to inject its own optical signal into a core of an optical fiber using the principle of Figure 2, the taps being disposed at varying distances from an optical receiver at an end of the fiber. Each tap was successively powered with a constant current source so as to yield a first power curve with no filter in place, and thereafter separate measurements were taken with an optical filter disposed between the end of the optical fiber and the optical receiver. The optical filter was a short length of glass-on-glass optical fiber (62.5/125 micron), and the power measurements with the filter in place are illustrated by a second power curve 52 illustrated in Figure 6. The actual power difference between the measurements with and without the filter in place as a function of the distance of each tap from the receiver is illustrated in Figure 7. As Figure 7 illustrates, the filter caused a 4.5 dB reduction of a detected signal for the tap closest to the optical receiver, and a 0.3 dB reduction of a detected signal for the most distant tap. Accordingly, the invention reduced the dynamic range by 4.2 dB while requiring an optical receiver which only needs an additional 0.3 dB sensitivity.

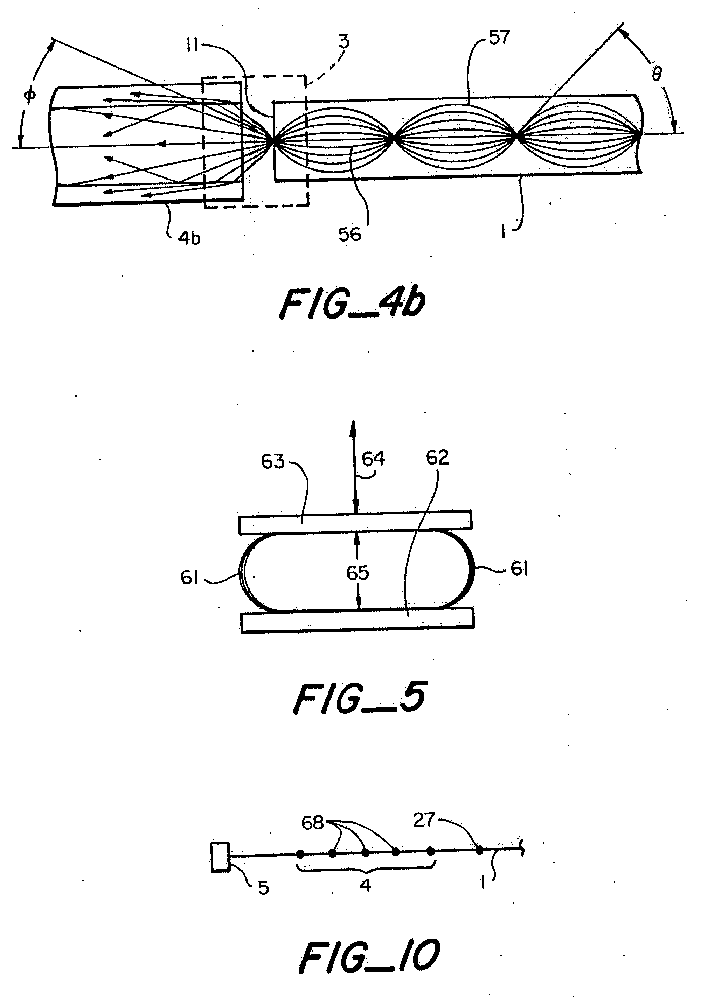

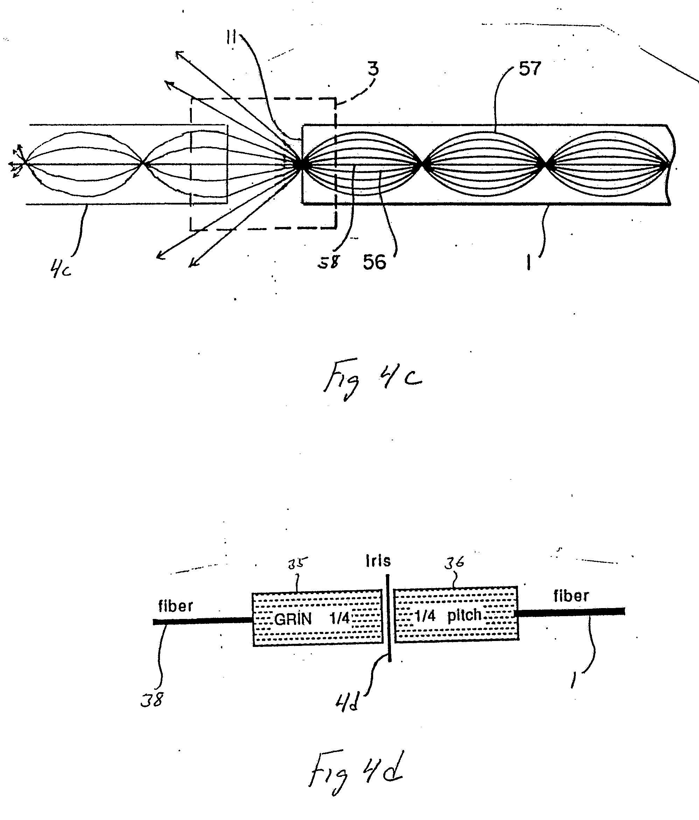

Preferred embodiments of a mode filter of the invention are illustrated in Figures 4 and 5. According to a first embodiment, the filter includes a waveguide which has a cross-sectional area smaller than a cross-sectional area of an end 11 of the fiber 1. According to a second embodiment, a waveguide of the filter has a numerical aperture smaller than the fiber 1. For both of these embodiments, the waveguide can be either step or graded index. According to a third embodiment, the filter is separated an optimum yet variable distance from the fiber end 11 so as to vary an amount of attenuation which primarily affects the higher ordered modes. According to a fourth embodiment, an iris is used to aid filtering. According to a fifth embodiment, small radius bends are used to achieve filtering. Combinations of these features of these five embodiments also are included within the scope of the invention.

Specific preferred structures will now be described by reference to Figures 4 and 5. The filter 4a in Figure 4a is a step index or graded index optical fiber which has a smaller cross-sectional size than the fiber 1 which causes some of the outermost modes in the fiber 1 not to be injected into the filter 4a and hence propagated thereby. Accordingly, higher order modes are preferentially attenuated over lower order modes.

Figure 4b illustrates an alternative mode filter 4b which again is a step index or graded index fiber which has a cone of acceptance or numerical aperture which is smaller than that of the fiber 1, again with the result that higher order modes are preferentially attenuated rather than lower order modes. Specifically, due to the lower numerical aperture of the filter 4b, e.g., higher order modes escape from the core of the filter 4b into its cladding in the case of a waveguide and are attenuated by a coating or buffer material around the waveguide, and/or by the waveguide cladding. The cone of acceptance of the fiber 1 is represented by the half angle $\theta$, and the cone of acceptance of the filter 4b is represented by the half angle $\theta$, and as indicated $\varphi$ should be less than $\theta$, if the filter is to be equal in cross-sectional size or larger than the fiber 1. Another embodiment is to choose a filter which is a waveguide having a cross-sectional size which is smaller than the fiber 1, and which has a smaller cone of acceptance as well.

According to the embodiment of Figure 4c, desirable filtering is also achievable by separating a filtering waveguide 4c, either step or graded index, from the fiber end 11. Simply separating the fibers will selectively strip the higher order modes in the fiber 1, and the greater the separation the more modes will be stripped.

Figure 4d illustrates yet a further embodiment of the invention whereby an iris 4d is disposed between first and second connecting lenses 35, 36 which are each connected to the distribution and transmission fiber 1 and a connection fiber 38 which is used for connection to an electro-optical transducer, e.g. an optical receiver. This configuration operates by stripping only those high order modes which are near the cladding of the lens 36 since it is these modes which intercept the iris. Of course it should be readily apparent that various combinations of the features set forth in Figures 4a-4d can be combined, such as for example variable spacing between a filter waveguide 4c and a transmission fiber 1 can be incorporated together with an iris 4d, and/or the filter 4c could be further formed so as to have a numerical aperture smaller than the fiber 1 and/or a cross-sectional size smaller than that of the fiber 1.

Another embodiment is to use a 1:2 splitter and connecting both outputs of the splitter to first and second optical receivers for achieving detection redundancy. Such splitters have been fond to attenuate higher ordered modes preferentially over lower order modes.

A further embodiment is to choose a filter which comprises means for bending a length of the distributive optical fiber 1 located downstream of the brightest or nearest tap to the receiver about a radius of curvature which is significantly smaller than a minimum bend radius for the fiber. This results in higher ordered modes being attenuated to a larger degree than lower ordered modes. A length of the fiber and its bend radius profile can be chosen to achieve any desired amount of attenuation, and preferably means should be included which allow the length and bend radius to be varied so as to be able to vary the amount of attenuation until an optimum value is obtained within the confines of other system limitations (e.g. receiver sensitivity).

A preferred embodiment of such means is illustrated in Figure 5 which shows an end portion 61 of the distributive fiber 1 bent in a plurality of turns by bars 62, 63. Preferably one of the bars 63 is movable as represented by opposed arrows 64 to allow the fiber bend radius to be changed. By appropriately varying a distance 65 between the bars 62, 63, and the number of turns or loops of the end portion between the bars, various attenuation values can be obtained and monitored until a desired dynamic range reduction has been obtained in combination with an acceptable amount of additional attenuation to the most remote tap or weakest system tap as perceived by the receiver.

### Example 2

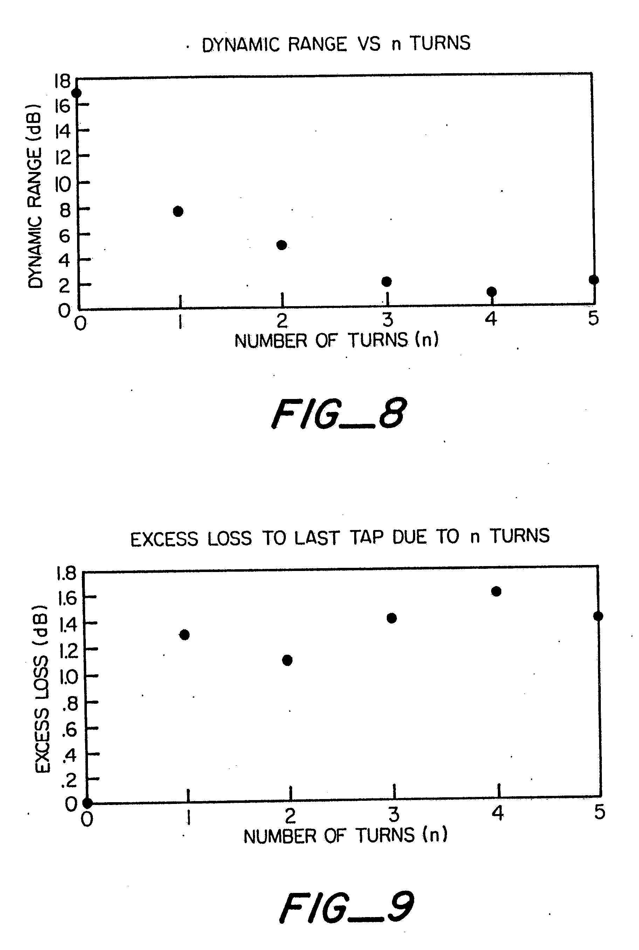

Four kilometers of graded index fiber had 24 taps attached thereto which induced macrobends to the fiber similar to that illustrated in Figure 2 so as to be capable of injecting light into the fiber thereat. A Photodyne power meter was placed at an end of the bus fiber, and a tap nearest to the receiver was located 55 meters therefrom. A tap furtherest from the receiver was located 4 kilometers from the receiver. Both the nearest and furtherest taps were powered by a 5018-000 Lytel lensed LED driven with 100 milliamps DC from a MA/COM350 current source. The near and far taps were separately powered, and intensities detected therefrom were measured, with a difference therebetween being the dynamic range of the bus without any filter in place. Thereafter, an end portion of the fiber closest to the receiver and downstream from the nearest tap was wrapped as illustrated in Figure 5 so as to impose a minimum bend radius of approximately 4.45 mm, and additional power measurements were made for each successive turn imposed on the end portion of the fiber, measurements being made for 1, 2, 3, 4, and 5 turns respectively. In each case, the absolute value of the dynamic range was recorded, and the results therefrom are illustrated in Figure 8. Figure 9 represents the excess loss or attenuation induced to the furtherest tap by the various fiber turns.

As Figure 8 illustrates, the dynamic range of the system with no filter in place was initially approximately 17 dB. For a filter comprising one fiber turn, the dynamic range was reduced to approximately 7.5 dB, the dynamic range progressively being reduced until it was approximately only 1 dB for four fiber turns. With five fiber turns, an intensity of an optical signal generated by the nearest tap was actually reduced to a value below that recorded for the furtherest tap, and the absolute value of the difference therebetween actually increased to 2 dB. This phenomenon is explained due to the fact that the fiber turns more strongly attenuate outermost than innermost modes, and since the nearest tap is relatively weak in innermost modes since little mode redistribution is able to occur prior to the mode filter, five fiber turns essentially strip off all significant outermost modes leaving only the innermost modes for the nearest tap remaining, and an intensity value thereof is actually less than that for the furtherest tap due to the mode redistribution that occurs to the signal generated thereby by the intervening taps.

Figure 9 illustrates the attenuation in dB for the optical signal generated by the furtherest tap by the various fiber turns, and this figure indicates that this attenuation is between 1.1 and 1.6 dB, a very acceptable attenuation given the drastic reduction in dynamic range.

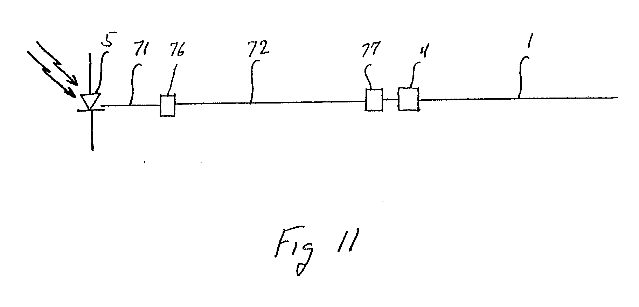

A further embodiment of the invention is to create a plurality of discrete macrobends in the near portion 61 of the optical fiber between the optical receiver and the nearest tap, such discrete macrobends being readily created by disposing a plurality of inactive write or read taps similar in construction to those used on the fiber 1 or 31. Figure 10 illustrates such a mode filter, with the inactive write taps being identified by reference numeral 68, and the near tap being identified by reference numeral 27. Again, a length of the optical fiber 1 bent by any one of the inactive taps 68, as well as a bend radius generated thereby, can be varied until acceptable attenuation and dynamic range reduction values are obtained, and the number of inactive taps 68 can also be varied as well to achieve such optimum values.

With the invention, the dynamic range can be reduced by more than any one of 1, 2, 3, 4, 5, 7, 10, 13, 15, and even 20 dB, with only minor increases in an attenuation to a dimmest signal on the distribution fiber.

The further aspect of the invention is the particular location of the filter 4 relative to the fiber 1 and any additional waveguides in the network 12 which are to be utilized for interconnecting an optical receiver with the waveguide 1. In general, the distribution and transmission optical fiber 1 in practice is rarely ever directly connected to an optical receiver 5. Rather, the optical receiver 5 generally includes a factory installed and aligned pigtail waveguide 71 which is connected to a "clean" head end connector fiber 72 via a splice or connector 76, and the "clean" fiber 72 is generally connected to the transmission fiber 1 via a second splice or connector 77. According to a preferred embodiment of the invention, as illustrated in Figure 11, the filter 4 is disposed upstream of any and all splices or connectors 76, 77 disposed at the system head end for enabling connection of a signal from the transmission fiber 1 to the optical receiver 5. This aspect of the invention achieves most optimum results since splices or connectors 76, 77 tend to redistribute modes and optical signals being transmitted therethrough. Accordingly, the dimmest signals from the most remote taps which relatively large proportions of low order modes as compared to high order modes are disturbed by the splices and connectors 76, 77 with the result that higher order modes are generated thereby. Accordingly, if the filter 4 is disposed downstream of some or all of the splices or connectors 76, 77 the dimmest signals would then be more severely attenuated than is necessary. Accordingly, though the invention includes any and all placements of the mode filter 4 relative to the splices and connections 76, 77 used to interconnect the fiber 1 and the receiver 5, the preferred embodiment is to place the mode filter upstream of the splices and connectors, as described.

Though the invention has been described by reference to specific and preferred embodiments thereof, the invention is not to be limited thereby and only by the appended claims.

## Claims

1. An apparatus for reducing a dynamic range of signals received by an optical receiver, comprising:
a multimode optical fiber;
a plurality of write taps serially disposed on the optical fiber for injecting a plurality of discrete multiplexed optical signals therein;
an optical receiver located downstream of the plurality of write taps and having means for receiving the signals from the optical fiber;
means disposed between the optical fiber and the optical receiver for attenuating a magnitude of an optical signal generated by a write tap transmitting nearest to the receiver substantially more than a magnitude of an optical signal generated by a write tap transmitting furtherest from the receiver, a difference between the attenuations being in excess of 1.0 dB.

2. The apparatus of claim 1, the difference being in excess of 3.0 dB.

3. The apparatus of claim 1, the difference being in excess of 5.0 dB.

4. The apparatus of claim 1, the difference being in excess of 10 dB.

5. The apparatus of any one of the preceding claims, the attenuating means being disposed upstream of all optical connections used for interconnecting the optical receiver and the fiber in a vicinity of a termination end of the fiber.

6. The apparatus of any one of the preceding claims, the series of write taps injecting the signals onto the optical fiber at sequential bends in the optical fiber by passing the signals through a side of an intermediate section of a cladding of the fiber so as to initially create an optical signal within a core of the optical fiber which includes a plurality of modes ordered from low to high, a first ratio of an intensity of highest ordered modes to an intensity of lowest ordered modes for each initially created signal being substantially greater than a second ratio of an intensity of the highest ordered modes to an intensity of the lowest ordered modes for each signal in the fiber when each signal has attained an equilibrium power distribution within a core of the fiber.

7. The apparatus of any one of the preceding claims, the optical fiber having a first numeral aperture, the attenuating means comprising a waveguide having a second numerical aperture, the second numerical aperture being smaller than the first numerical aperture.

8. The apparatus of any one of the preceding claims, the attenuating means comprising a waveguide having a smaller cross-sectional area than the fiber.

9. The apparatus of any one of the preceding claims, the attenuating means comprising a waveguide having an end physically separated from an end of the fiber so as to achieve a desired degree of signal attenuation.

10. The apparatus of any one of the preceding claims, the attenuating means including an iris disposed between first and second lenses.

11. The apparatus of any one of the preceding claims, the attenuating means comprising means for bending the fiber about a radius of curvature smaller than its minimum bend radius and about a total length so as to substantially preferentially attenuate outermost modes rather than innermost modes.

12. The apparatus of any one of the preceding claims, the bending means comprising first and second opposed bars, a part of the optical fiber being looped between the bars.

13. The apparatus of claim 11, the bending means comprising a series of inactive taps.

14. An optical fiber distribution system for distributing information for a plurality of subscriber terminals, comprising:
a plurality of subscriber terminals;
first means for sending information to each of the terminals;
an optical receiver;
a multimode optical fiber;
a plurality of write taps serially disposed on the optical fiber for injecting a plurality of discrete multiplexed optical signals into the optical fiber from the subscriber terminals, each tap injecting its corresponding signal in a manner so as to initially create within a core of the optical fiber an optical signal which includes a plurality of modes ordered from low to high, a first ratio of an intensity of highest ordered modes to an intensity of lowest ordered modes for each initially created signal being substantially greater than a second ratio of an intensity of the highest ordered modes to an intensity of the lowest ordered modes for each signal in the fiber when each signal has attained an equilibrium power distribution within a core of the fiber;
means disposed between the optical fiber and the optical receiver for attenuating a magnitude of an optical signal generated by a tap transmitting nearest to the receiver substantially more than a magnitude of an optical signal generated by a tap transmitting furtherest from the receiver, a difference between the attenuations being in excess of 1.0 dB.

15. The system of claim 14, the attenuating means being disposed upstream of all optical connections used for interconnecting the optical receiver and the fiber in a vicinity of a termination end of the fiber.

FIG_1

FIG_2

INTENSITY

15    16

14    17

CORE/CLADDING
BOUNDRY    ← DIAMETER →    CORE/CLADDING
BOUNDRY

### FIG_3

11    3    57

4a    58    56    1

### FIG_4a

RYN002

FIG_4b

FIG_5

FIG_10

Fig 4c

Fig 4d

POWER VS DISTANCE FROM THE RECEIVER

85/125 BUSS WITH NO FILTER

51

85/125 BUSS WITH MODE FILTER

52

POWER ($\mu$W) vertical axis, DISTANCE FROM RECEIVER (m) horizontal axis

FIG_6

EP 0 316 191 A2

POWER DIFFERENCE VS DISTANCE FROM RECEIVER

FIG_7

EP 0 316 191 A2

RYN002

EP 0 316 191 A2

DYNAMIC RANGE VS n TURNS

FIG_8

EXCESS LOSS TO LAST TAP DUE TO n TURNS

FIG_9

EP 0 316 191 A2

Fig 11